# EUROPEAN PATENT APPLICATION

(11) **EP 1 764 379 A1**
(43) Date of publication of application: **21.03.2007**
(21) Application number: 05077125.2
(22) Date of filing: 19.09.2005
(51) Int. Cl.: C08F 10/00, C08F 4/64, C07F 7/00

(54) **Polymerization catalyst comprising an amidine ligand**

(71) Applicant: DSM IP Assets B.V., 6411 TE Heerlen (NL)
(72) Inventor: IJpeij, Edwin Gerard, 6136 JN Sittard (NL); Arts, Henricus Johannes, 6151 JD Munstergeleen (NL); Zuideveld, Martin Alexander, 6229 GD Maastricht (NL); Van der Burgt, Francis, 6049 HL Herten (NL); Van Doremaele, Gerardus Henricus Josephus, 6132 HN Sittard (NL)
(74) Representative: Mooij, Johannes Jacobus

(57) **Abstract**

The invention relates to a process for the preparation of a polymer comprising at least one aliphatic or aromatic hydrocarbyl C₂₋₂₀ olefin in the presence of a catalyst, comprising an organometallic compound and an activator, and optionally a scavenger, characterized in that the organometallic compound is a compound according to formula 1: 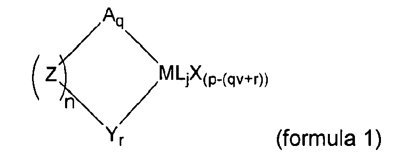 where:
M is a metal of group 3, 4, 5, 6 or 7, or the lanthanide series, and p is the valency of the metal M, A represents a neutral or anionic spectator ligand whose valency v is 0,1 or 2, and q is an integer denoting the number of spectator ligands A, Z is an optional bridging moiety, n is the integer number of parallel bridging moieties Z, Y is an amidine-containing spectator ligand represented by formula 2: 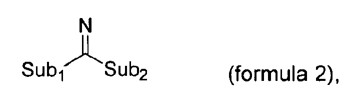 wherein the amidine-containing ligand is covalently bonded to the metal M via the imine nitrogen atom, Sub₁ is a substituent, which comprises a group 14 atom through which Sub₁ is bonded to the imine carbon atom. Sub₂ is a hydrocarbyloxide or hydrocarbylsulphide, bonded via O respectively S to the imine carbon atom,
r is an integer > 0, L is an optional neutral Lewis basic ligand, j is an integer denoting the number of neutral ligands L, and X is an anionic ligand.

The invention further relates to a organometallic compound according to formula 1 and a process for the preparation of this compound as well as to a UHMWPE having a weight average molecular weight of at least 4.000 kg/mol and a molecular weight distribution M_{w}/Mₙ of less than 2.6.

## Description

The invention relates to a process for the preparation of a polymer comprising at least one aliphatic or aromatic hydrocarbyl C₂₋₂₀ olefin in the presence of a catalyst comprising an organometallic compound, an activator and optionally a scavenger. The invention further relates to a new catalyst, a method for the preparation of this catalyst and polymers prepared with the process of the invention.

A process for the preparation of a polymer comprising at least one aliphatic or aromatic hydrocarbyl C₂₋₂₀ olefin in the presence of a catalyst, an activator, and optionally a scavenger is known from WO-A-02070560. WO-A-02070560 discloses a process for the copolymerization of ethylene and at least one additional alpha olefin having from 3 to 8 carbon atoms characterized in that said process employs a catalyst system for olefin polymerization comprising:
an organometallic complex of a group 4 metal; and
an activator.

A disadvantage of this known process is its synthesis and in particular the synthesis of the ligand. The preparation of an iminoimidazoline ligand requires at least two steps. In a first step a diarylamine has to be prepared, which in a second step is reacted with the highly toxic cyanogens bromide. The aim of the current invention is to provide a process for the preparation of a polymer with a catalyst that is easier to prepare in less unit operation than the catalyst in the known process.

This aim is achieved in that the organometallic compound is a compound according to formula 1: 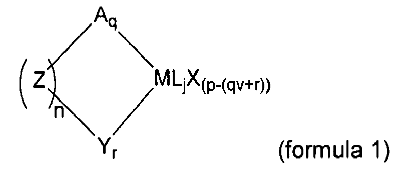 where:
M is a metal of group 3 -13 or the lanthanide series, and p is the valency of the metal M;
A represents a neutral or anionic spectator ligand whose valency v is 0,1 or 2 and q is an integer denoting the number of spectator ligands A;
Z is an optional bridging moiety, and n is the integer number of parallel bridging moieties Z; Y is an amidine-containing spectator ligand represented by formula 2: 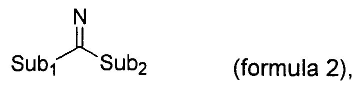
wherein the amidine-containing ligand is covalently bonded to the metal M via the imine nitrogen atom, and Sub₁ is a substituent comprising a group 14 atom through which Sub₁ is bonded to the imine carbon atom. Sub₂ is a substituent comprising a hydrocarbyloxide or a hydrocarbylsulphide, bonded via O respectively S to the imine carbon atom;
r is an integer > 0, denoting the number of ligands Y;
L is an optional neutral Lewis basic ligand, and j is an integer denoting the number of
neutral ligands L; and
X is an anionic ligand.

In the process of the invention the catalyst is significantly easier to prepare than the catalyst in the known process. An additional advantage is that the catalyst used in the process of the invention can be manufactured at lower costs than the catalyst used in the known process. Another advantage of the catalyst used in the process of the invention is the better accessibility of the starting materials for the ligand synthesis. A further advantage is that for the synthesis of the ligand no highly toxic chemicals such as cyanogen bromide are required.

Processes for the preparation of a polymer of at least one aliphatic or aromatic hydrocarbyl C₂₋₂₀ olefin are fairly well known in the art. These processes are generally conducted by contacting at least one olefinic monomer with a catalyst and optionally a scavenger in the gas phase or in the presence of an inert hydrocarbon solvent. Suitable solvents are a C₅₋₁₂ hydrocarbon which may be substituted by a C₁₋₄ alkyl group, such as pentane, hexane, heptane, octane, isomers and mixtures thereof, cyclohexane, methylcyclohexane, pentamethyl heptane and hydrogenated naphtha. The process of the invention may be conducted at temperatures from about 20° C to about 250° C, depending on the product being made.

An olefinic monomer is understood to be a molecule containing at least one polymerizable double bond.

Suitable olefinic monomers are C₂₋₂₀ olefins. Preferred monomers include ethylene and C₃₋₁₂ alpha olefins which are unsubstituted or substituted by up to two C₁₋₆ alkyl radicals, C₈₋₁₂ vinyl aromatic monomers which are unsubstituted or substituted by up to two substituents selected from the group consisting of C₁₋₄ alkyl radicals, and C₄₋₁₂ straight chained or cyclic hydrocarbyl radicals which are unsubstituted or substituted by a C₁₋₄ alkyl radical. Illustrative non-limiting examples of such α-olefins are propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. These α-olefins may be used in combination.

The monomer may also be a polyene comprising at least two double bonds. The double bonds may be conjugated or non-conjugated in chains, ring systems or combinations thereof, and they may be endocyclic and/or exocyclic and may have different amounts and types of substituents. This means that the polyene may comprise at least one aliphatic, alicyclic or aromatic group, or combinations thereof.

Suitable polyenes include aliphatic polyenes and alicyclic polyenes. More specifically, aliphatic polyenes can be mentioned, such as 1,4-hexadiene, 3-methyl-1,4-hexadiene, 4-methyl-1,4-hexadiene, 5-methyl-1,4-hexadiene, 4-ethyl-1,4-hexadiene, 1,5-hexadiene, 3-methyl-1,5-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 1,6-octadiene, 6-methyl-1,6-octadiene, 7-methyl-1,6-octadiene, 6-ethyl-1,6-octadiene, 6-propyl-1,6-octadiene, 6-butyl-1,6-octadiene, 1,7-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 1,8-nonadiene, 5-methyl-1,4-decadiene, 5-ethyl-1,4-decadiene, 5-methyl-1,5-decadiene, 6-methyl-1, 5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 1,9-decadiene, 1,5,9-decatriene, 6-methyl-1,6-undecadiene, 9-methyl-1,8-undecadiene and 1,13-tetradecadiene, 1,3-butadiene, isoprene.

Alicyclic polyenes may consist of at least one cyclic fragment. Examples of these alicyclic polyenes are vinylcyclohexene, vinylnorbornene, ethylidene norbornene, dicyclopentadiene, cyclooctadiene, 2,5-norbornadiene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcycloocatane, 1,5-diallylcyclooctane, 1-allyl-4-isopropenylcyclohexane, 1-isopropenyl-4-vinylcyclohexane and 1-isopropenyl-3-vinylcyclopentane, and 1,4-cyclohexadiene. Preferred polyenes are polyenes having at least one endocyclic double bond and optionally at least one exocyclic double bond, such as 5-methylene-2-norbornene and 5-ethylidene-2-norbornene, 5-vinylnorbornene, and 2,5-norbornadiene, dicyclopentadiene, vinylcyclohexene and the like.

Examples of aromatic polyenes are divinylbenzene (including its isomers), trivinylbenzene (including its isomers) and vinylisopropenylbenzene (including its isomers).

All of the above-mentioned monomers may be further substituted with at least one group comprising a heteroatom of group 13-17, or combinations thereof.

Homopolymers, copolymers and terpolymers of the above-mentioned olefinic monomers and blends thereof can be prepared with the process of the present invention.

The catalyst used in the process of the invention comprises an organometallic compound and an activator. The metal (M) in the organometallic compound of formula 1 represents an atom of group 3 - 13 or the lanthanide series. Preferably, the metal is chosen from group 3, 4, 5, 6 or 7, or the lanthanide series, more preferably from group 4-7. Even more preferably, the metal is chosen from Group 4. Most preferably, the metal is Ti.

In the organometallic compound used in the process of the invention, A is a neutral or anionic spectator ligand, and q is an integer denoting the number of spectator ligands A. The valency v of A is 0, 1, or 2. Examples of monoanions are carbanions, silylanions, germylanions, amides, phosphides, imines, and chalconides. Examples of dianionic ligands are biphenoxides, cyclooctatetraenides, boroles and the like.

The spectator ligand A is preferably an imine ligand, a chalconide, or a cyclopentadienyl-containing ligand.

An imine ligand is defined as a group containing a double bonded nitrogen atom. Examples of imine ligands are ketimine, guanidine, phosphinimine, iminoimidazolidine, (hetero)aryloxyimines, pyrroleimines, indoleimines, imidazoleimines or (hetero)aryloxides, (substituted) pyridin-2-yl-methoxy, (substituted) quinolin-2-yl-methoxy, 8-hydroxyquinoline, 8-aminoquinoline, 8-phosphinoquinoline, 8-thioquinoline, 8-hydroxyquinaldine, 8-aminoquinaldine, 8-phosphinoquinaldine, 8-thioquinaldine and 7-azaindole or indazole and the like.

A cyclopentadienyl-containing ligand comprises at least one cyclopentadienyl (Cp) ring. This ring may be substituted with at least one R' group. When the Cp ring is substituted with at least two R' groups, these R' groups may form at least one ring system. As result, the Cp-containing ligand may be an indenyl or fluorenyl group.

The R' groups may each independently be hydrogen or a hydrocarbon radical with 1-20 carbon atoms (e.g. alkyl, aryl, biaryl, aralkyl, alkaryl and the like) or a heteroatom comprising a moiety from group 13-17. Examples of such hydrocarbon radicals are methyl, ethyl, n-propyl, i-propyl, butyl (including isomers), hexyl (including isomers), decyl (including isomers), phenyl, biphenyl (including isomers) and the like. Examples of heteroatom-containing moieties of group 13-17 are borane radicals, silyl radicals, germyl radicals, stannyl radicals, amide radicals, phosphide radicals, oxide radicals, sulphide radicals, halide radicals, halide substituted hydrocarbyl radicals and the like. Also, two adjacent hydrocarbon radicals may be connected with each other resulting in a ring system. Such a group may also contain one or more R' groups as substituents. R' may also be a substituent which instead of or in addition to carbon and/or hydrogen may comprise one or more heteroatoms of groups 13-17.

Suitable ligands A are (substituted) cyclopentadienyl groups, (substituted) indenyl groups, (substituted) fluorenyl groups, (substituted) tetrahydroindenyl groups, (substituted) tetrahydrofluorenyl groups, (substituted) octahydrofluorenyl groups, (substituted) benzoindenyl groups, (substituted) heterocyclopentadienyl groups, (substituted) heteroindenyl groups, (substituted) heterofluorenyl groups, or their isomers. A heterocyclopentadienyl group (hereinafter referred to as 'hetero ligand') is understood to be a group that has been derived from a cyclopentadienyl group, but in which at least one of the C atoms in the 5-ring of the cyclopentadienyl has been replaced by a hetero atom, which heteroatom may be chosen from group 14, 15 or 16. If there is more than one heteroatom present in the 5-ring of the hetero ligand, these heteroatoms may be the same or different. More preferably, the heteroatom is chosen from group 15, while yet more preferably the heteroatom is phosphorus.

If ligand A is a neutral ligand, this ligand may be as defined under L.

In the organometallic compound used in the process of the invention Z is an optional bridging moiety, and n is the integer number of parallel bridging moieties Z. In case of n = 0, there is no bridge between A and Y. The optional bridging group Z may contain sp³, sp² or sp hybridized atoms of group 13 to 16 or combinations thereof. The bridging group Z may consist of linear, cyclic fragments, spiro ring systems, or combinations thereof. Examples of a carbon containing Z group may be a hydrocarbon group with 1-20 carbon atoms, e.g. alkylidene, arylidene, biarylene, aryl alkylidene, etc. Examples of such groups are methylene, ethylene, propylene, butylene, phenylene, naphthylene, biphenylene, binaphthylene. Examples of silicon-containing groups are dimethylsilyl, diethylsilyl, dipropylsilyl, including its isomers, (substituted) diphenylsilyl, dimethoxysilyl, diethoxysilyl, dipropoxysilyl, and diphenoxysilyl.

In the organometallic compound used in the process of the invention Y is an amidine-containing spectator ligand, and r is an integer with r > 0. An amidine-containing spectator ligand is a ligand that is represented by formula 2. The amidine-containing ligand is covalently bonded to the metal via the imine nitrogen atom. This means that the imine nitrogen atom of the imine does not have any substituents but the imine carbon atom. Sub₁ comprises a group 14 atom through which Sub₁ is bonded to the imine carbon atom. Sub₂ is a hydrocarbyloxide or hydrocarbylsulphide, through which Sub₂ is bonded to the imine carbon atom. Sub₁ preferably represents a hydrocarbyl radical, optionally substituted with heteroatoms of group 13 - 17, or a silyl radical, optionally substituted with group 13-17 atoms.

Sub₁ or Sub₂ may be bonded to the bridging moiety Z or may be part of a ring system, which ring system may be bonded to the bridging moiety Z.

In the organometallic compound used in the process of the invention L is optionally a neutral Lewis basic ligand, and j is an integer denoting the number of neutral ligands L. The ligand L may be present in the organometallic compound for reasons of stability. If the ligand L is present, L is an ether, a thioether, a tertiary amine, a tertiary phosphane, an imine, or a bi-, or oligodentate, comprising an ether, a thioether, a tertiary amine, or a tertiary phosphane functional group, or combinations thereof.

Suitable ethers are tetrahydrofuran and diethylether. Suitable thioethers are thiophene, diethylsulfide, and dimethylsulfide. Suitable tertiary amines are trialkylamines, pyridine, bipyridine, TMEDA, and (-)-sparteine). Suitable tertiary phosphanes are triphenylphoshine, trialkylphosphanes. Suitable of imines are ketimines, guanidines, iminoimidazolidines, phosphinimines, amidines and the like. Suitable bidentate ligands are diimines, alkyl or aryldiphoshanes, dimethoxyethane. Suitable oligodentate ligands are triimines (such as tris(pyrazolyl)alkanes), cyclic multidentate ligands comprising heteroatoms of group 13-17, including crown ethers optionally having heteroatoms of group 13-17, azo-crown ethers optionally having heteroatoms of group 13-17, phospha-crown ethers optionally having heteroatoms of group 13-17, crown ethers having combinations of heteroatoms of group Hydrocarbyloxide or hydrocarbylsulphide optionally having heteroatoms of group 13-17 and crown ethers containing heteroatoms of group 14-17 or combinations thereof.

In the catalyst used in the process of the invention, X is an anionic ligand. Each anionic ligand, X, bonded to M, may be independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof. Preferably, X is a hydride or a moiety selected from the group consisting of monoanionic spectator ligands, halide, alkyl, aryl, silyl, germyl, aryloxy, alkoxy, amide, siloxy and combinations thereof (e.g. alkaryl, aralkyl, silyl substituted alkyl, silyl substituted aryl, aryloxyalkyl, aryloxyaryl, alkoxyalkyl, alkoxyaryl, amidoalkyl, amidoaryl, siloxyalkyl, siloxyaryl, amidosiloxyalkyl, haloalkyl, haloaryl, etc.) having up to 20 non-hydrogen atoms.

Preferred anionic ligands X include halides and hydrocarbyl anions. A preferred halide is chloride. In one embodiment of the invention hydrocarbyl groups are anionically charged hydrocarbyl groups. In addition to the usual definition of a hydrocarbyl group, in this application a hydrocarbyl group also comprises a hydride group. The hydrocarbyl groups optionally contain heteroatoms of group 13-17. Preferred hydrocarbyl groups include hydride, alkyl-, aryl-, aralkyl-, alkaryl-, substituted vinyl- and substituted allylgroups. More preferred hydrocarbyl groups include hydride, alkyl-, aryl-, aralkyl- and alkaryl groups. Most preferred hydrocarbyl groups include alkyl-, aryl-, aralkyl- and alkaryl groups. Examples of such most preferred hydrocarbyl groups are methyl, benzyl, methyltrimethylsilyl, phenyl, methoxyphenyl, dimethoxyphenyl, N,N-dimethylaminophenyl, bis (N,N-dimethylamino)phenyl, fluorophenyl, difluorophenyl, trifluorophenyl, tetrafluoropheny, perfluorophenyl, trialkylsilylphenyl, bis(trialkylsilyl)phenyl, tris(trialkylsilyl)phenyl and the like.

The number of ligands (X and L) depends on the valency of the metal and the stability of the organometallic compound. The organometallic compound may be monomeric, oligomeric or a cluster. The number of anionic ligands equals the valency of the metal used. The number of neutral ligands on the organometallic reagent may range from 0 to the amount that satisfies the 18-electron rule, as known in the art.

An additional advantage of the process of the invention is that extremely high molecular weight polyolefins can be prepared. This is particularly advantageous in a process for the preparation of ultrahigh molecular weight polyethylene with a weight average molecular weight of more than 400,000 g/mol (UHMWPE) and for an ethylene/α-olefin polyene copolymer or an ethylene/α-olefin /non-conjugated polyene terpolymer.

In the process of the invention the catalyst comprises an activator. Activators for single-site catalysts are fairly well known in the art. These activators often comprise a group 13 atom, such as boron or aluminium. Examples of these activators are described in Chem. Rev., 2000, 100, 1391 by E. Y-X. Chen and T.J. Marks. A preferred activator is a borate, a borane or an alkylaluminoxane (e.g. methylaluminoxane (MAO)).

In the process of the invention the catalyst optionally comprises a scavenger. A scavenger is a compound that reacts with impurities present in the process of the invention, which are poisonous to the catalyst. A scavenger in an embodiment of the invention can be a hydrocarbyl of a metal or metalloid of group 1-13 or its reaction products with at least one sterically hindered compound containing a group 15 or 16 atom. Preferably, the group 15 or 16 atom of the sterically hindered compound bears a proton. Examples of these sterically hindered compounds are *tert-*butanol, *iso-*propanol, triphenylcarbinol, 2,6-di-*tert*-butylphenol, 4-methyl-2,6-di-*tert-*butylphenol, 4-ethyl-2,6-di-*tert*-butylphenol, 2,6-di-*tert*-butylanilin, 4-methyl-2,6-di-*tert-*butylanilin, 4-ethyl-2,6-di-*tert*-butylanilin, HMDS (hexamethyldisilazane), diisopropylamine, di-*tert*-butylamine, diphenylamine and the like. Some non-limiting examples of scavengers are butyllithium including its isomers, dihydrocarbylmagnesium, trihydrocarbylaluminium, such as trimethylaluminium, triethylaluminium, tripropylaluminium (including its isomers), tributylaluminium (including its isomers) tripentylaluminium (including its isomers), trihexyl aluminium (including its isomers), triheptyl aluminium (including its isomers), trioctyl aluminium (including its isomers), hydrocarbylaluminoxanes and hydrocarbylzinc and the like, and their reaction products with a sterically hindered compound or an acid, such as HF, HCl, HBr, Hl.

The invention further relates to an organometalic compound suitable for the preparation of a polyolefin according to claim 4.

The invention also relates to a supported catalyst, which comprises a organometallic compound of formula 1, a supporting material and optionally a scavenger and/or an activator.

A supporting material is defined as an inorganic or organic compound that does not dissolve in the inert hydrocarbon solvent in which the process of the invention is carried out. Suitable inorganic supports include silica, magnesium halides, such as MgF₂, MgCl₂, MgBr₂, Mgl₂, zeolites, and alumina. Suitable organic supports include polymers. Some non-limiting examples of polymeric supports are polyolefins such as polystryrene, polypropylene and polyethylene, polycondensates such as polyamides and polyesters and combinations thereof.

The invention also relates to a process for the production of the organometallic compound of formula 1. In this process a organometallic reagent of formula 3 is contacted with an amidine-containing ligand precursor according to formula 2, with

MLⱼXₚ (formula 3),

wherein M is a metal from group 3, 4, 5, 6 or 7, or a metal from the lanthanide series, and p is the valency of the metal M,
L is a neutral Lewis based ligand bonded to M, and j represents an integer denoting the number of neutral ligands L, and
X is an anionic ligand bonded to M.

An amidine-containing ligand precursor can be a metal salt of an amidine, an amidine, or the HB adduct of an amidine.

If a metal salt of an amidine according to formula 4 is used, the process as described above can be carried out as such, with 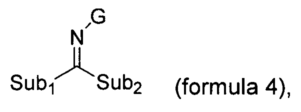 wherein Sub₁ and Sub₂ are groups as described above, and G is a group comprising a metal of group 1, 2, or 13 or a group comprising Si, Ge, Sn or Pb. If G represents a group with a metal of group 1, group G may further contain Lewis basic ligands as defined for L. If group G contains a metal of group 2, the group G contains a second anionic ligand. This anionic ligand may be another negatively charged amidine ligand or an anionic ligand as defined for X. If the group G contains an atom of group 13, this atom can further be substituted with two groups which each can be either an amidine-containing ligand or an anionic group as defined for X, or combinations thereof. If group G comprises an atom chosen from the series of Si, Ge, Sn or Pb, this atom can be substituted with three hydrocarbyl groups, optionally containing at least one hetero atom of group 13 - 17.

If the process is carried out with an amidine according to formula 5, or its HB adduct, 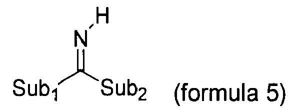 wherein Sub₁ and Sub₂ are groups as described above, the process is carried out in the presence of at least 1 equivalent of a base with respect to the organometallic reagent.

If the process is carried out with the HB adduct of an amidine-containing ligand according to formula 5, the process has to be carried out in the presence of at least two equivalents of a base. The advantage of the HB adduct of the amidine-containing ligand is that its stability towards hydrolysis is significantly higher than for the metal salt of formula 4 or the amidine of formula 5.

Methods for the preparation of amidine ligands and the metal salt thereof are well known in the art.

Some non-limiting examples of B are halides, such as fluoride, chloride, bromide, or iodide, sulfate, hydrogen sulfate, phosphate, hydrogen phosphate, dihydrogen phosphate, carbonate, hydrogen carbonate, aromatic or aliphatic carboxylates, cyanide, tetrafluoroborate, (substituted) tetraphenylborates, fluorinated tetraarylborates, alkyl or aryl sulfonates.

If the method for the preparation of the catalyst is carried out in the presence of a base, suitable bases include amines, phosphanes, carboxylates (for example potassium acetate), fluorides, hydroxides, cyanides, amides and carbonates of Li, Na, K, Rb, Cs, ammonium and the group 2 metals Mg, Ca, and Ba, the alkali metal (Li, Na, K, Rb, Cs) phosphates and the phosphate esters (e.g. C₆ H₅ OP(O)(ONa)₂ and related aryl and alkyl compounds) and their alkoxides and phenoxides, thallium hydroxide, alkylammonium hydroxides and fluorides. Some of these bases may be used in conjunction with a phase transfer reagent, such as tetraalkylammonium salts or crown ethers. Stronger bases may also be applied, for example carbanions such as hydrocarbanions and hydrides of group 1, group 2, group 12 or group 13 elements. The alkalimetals of group 1 may also be applied as a base. If the spectator ligand is a diacidic spectator ligand, at least two equivalents of a base are required.

Preferred bases include amines, organolithium compounds, or organomagnesium compounds, alkali metals, group 1 hydrides or group 2 hydrides.

More preferred bases are mono-, di-, or trialkylamines or aromatic amines, organolithium compounds, organomagnesium compounds, sodium hydride or calcium hydride. In this application, aromatic amines are understood to be compounds having a nitrogen atom in an aromatic ring system or mono-, di-, or triarylamines.

Even more preferred bases are triethylamine, pyridine, tripropylamine, tributylamine, 1,4-diaza-bicyclo[2.2.2]octane, pyrrolidine or piperidine organolithium compounds, or organomagnesium compounds. Examples of organomagnesium compounds are methylmagnesium halides, phenylmagnesium halides, benzylmagnesium halides, biphenylmagnesium halides, naphthylmagnesium halides, tolylmagnesium halides, xylylmagnesium halides, mesitylmagnesium halides, dimethylresorcinolmagnesium halides, N,N-dimethylanilinemagnesium halides, dimethylmagnesium, diphenylmagnesium, dibenzylmagnesium, bis(biphenyl)magnesium, dinaphtylmagnesium, ditolylmagnesium, dixylylmagnesium, dimesitylmagnesium, bis(dimethylresorcinol)magnesium and bis(N,N-dimethylaniline)magnesium.

Examples of organolithium compounds are methyllithium, phenyllithium, benzyllithium, biphenyllithium, naphthyllithium, lithio-dimethylresorcinol and lithio-N,N-dimethylaniline.

In a most preferred embodiment of the process of the invention the neutral ligand L can be the base. In this case, depending on the number of neutral ligands and the number of required equivalents of a base, there is no need, or a reduced need, for an added base. Examples of L serving as a base are mono-, bi- or multidentate amines, momo-, bi-, or multidentate phoshanes, aza or phospha-crown ethers, or combinations thereof.

In order to obtain an organometallic compound that can be activated by advanced activators, such as boron comprising activators (boranes, borates), the anionic ligand X in the organometallic compound has to be a hydrocarbyl group. The process for the preparation of the organometallic compound is therefore optionally carried out in the presence of a hydrocarbylating agent. In this application, hydrocarbylating agents are understood to be nucleophilic groups comprising a metalcarbon bond, a metalloid-carbon bond or a metal or metalloid hydride bond. The number of equivalents required for a process for the preparation of a hydrocarbylated organometallic compound is at least the number of the anionic ligands X that has to be replaced by a hydrocarbylating agent. Suitable hydrocarbylating agents are tri- or tetrahydrocarbyl boron, tri- or tetrahydrocarbyl aluminium, tri- or tetrahydrocarbyl gallium, tri- or tetrahydrocarbyl indium and di- or tetrahydrocarbyl tin, or the reaction products of these hydrocarbylating agents with sterically hindered alcohols, thiols, amines or phosphanes.

Preferably the hydrocarbylating agent comprises a metal or a metalloid chosen from group 1, 2, 11, 12, 13 or 14. Examples of hydrides from metals or metalloids of group 1, 2, 11, 12, 13, 14 are lithium hydride, sodium hydride, potassium hydride, calcium hydride, magnesium hydride, copper hydride, zinc hydride, cadmium hydride, borane, aluminum hydride, gallium hydride, silicon hydride, germanium hydride and tin hydride.

More preferably the hydrocarbylating agent comprises Li, Mg, Zn, or Al.

Examples of Li-containing hydrocarbylating agents are methyllithium, phenyllithium, benzyllithium, biphenyllithium, naphtyllithium, lithio-dimethylresorcinol, and lithio-N,N-dimethylaniline.

Examples of magnesium-containing hydrocarbylating agents are methylmagnesium halide, phenylmagnesium halide, benzylmagnesium halide, biphenylmagnesium halide, naphtylmagnesium halide, tolylmagnesium halide, xylylmagnesium halide, mesitylmagnesium halide, dimethylresorcinolmagnesium halide, N,N-dimethylanilinemagnesium halide, dimethylmagnesium, diphenylmagnesium, dibenzylmagnesium, (biphenylene)magnesium, dinaphtylmagnesium, ditolylmagnesium, dixylylmagnesium, dimesitylmagnesium, bis(dimethylresorcinol)magnesium and bis(N,N-dimethylaniline)magnesium.

Examples of aluminium-containing hydrocarbylating agents are diisobutylaluminium hydride, C₁-C₂₀ trihydrocarbyl aluminium, and hydrocarbyl aluminoxanes.

The process for the preparation of the organometallic compound according to the invention is preferably carried out in a solvent. Suitable solvents are solvents that do not react with the organometallic reagent or the organometallic compound formed in the process of the invention. Examples of suitable solvents are aromatic and aliphatic hydrocarbons, halogenated hydrocarbons, amides of the aliphatic carboxylic acids and primary or secondary amines, DMSO, nitromethane, acetone, acetonitrile, benzonitrile, ethers, polyethers, cyclic ethers, lower aromatic and aliphatic ethers, esters, pyridine, alkylpyridines, cyclic and primary or secondary amines, and mixtures thereof. Preferred solvents include aromatic or aliphatic hydrocarbons or mixtures thereof.

The process for the preparation of the catalyst according to the invention is carried out by contacting an amidine-containing ligand with an organometallic reagent of formula 3. The desired organometallic compound is often formed instantaneously. Excess of a base may be applied without negative effects on the reaction product.

During the reaction, a salt is formed. The reaction mixture as obtained by contacting an amidine-containing ligand with an organometallic reagent according to formula 3 can be used as a catalyst in a polyolefin polymerization without an additional filtration step if the salt formed during the reaction is compatible with the polymerisation process. If a salt free organometallic compound is required, the salt can be removed by filtration. Depending on the solubility of the organometallic compound, the mixture may be heated and then filtered. An advantage of the present invention is that the filtrate may be used as such without further purification in a following process, such as a hydrocarbylation step or a polymerization process. If desired, the organometallic compound may be isolated by distillation of the solvent, by precipitation or by crystallization from a suitable solvent.

Preferably, the process of the invention is carried out in the presence of a boron-containing or aluminium-containing co-catalyst in the presence of a catalyst according to the invention, which is formed in situ in the polymerization equipment.

The invention further relates to polymers obtainable with the catalyst of the invention.

## Claims

1. Process for the preparation of a polymer comprising at least one aliphatic or aromatic hydrocarbyl C₂₋₂₀ olefin in the presence of a catalyst comprising an organometallic compound, an activator and optionally a scavenger, **characterized in that** the organometallic compound is a compound according to formula 1: 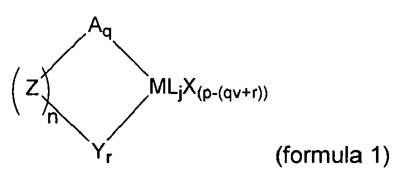 where:
M is a metal of group 3 -13 or the lanthanide series, and p is the valency of the metal M;
A represents a neutral or anionic spectator ligand whose valency v is 0,1 or 2, and q is an integer denoting the number of spectator ligands A;
Z is an optional bridging moiety, and n is the integer number of parallel bridging moieties Z;
Y is an amidine-containing spectator ligand represented by formula 2: 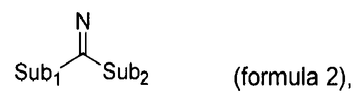
wherein the amidine-containing ligand is covalently bonded to the metal M via the imine nitrogen atom, Sub₁ is a substituent, which comprises a group 14 atom through which Sub₁ is bonded to the imine carbon atom. Sub₂ is a hydrocarbyloxide or hydrocarbylsulphide, bonded via O respectively S to the imine carbon atom;
r is an integer > 0, denoting the number of ligands Y;
L is an optional neutral Lewis basic ligand, and j is an integer denoting the number of neutral ligands L, and
X is an anionic ligand that is independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof.

2. Process according to claim 1, wherein the activator is a borate, a borane, or an alkylaluminoxane.

3. Process according to claim 1 or claim 2, wherein the polymer is UHMWPE or EPDM.

4. Organometallic compound according to formula 1, where M is a metal of group 3, 4, 5, 6 or 7 or the lanthanide series, and p is the valency of the metal M, A represents a neutral or anionic spectator ligand whose valency v is 0,1 or 2, and q is an integer denoting the number of spectator ligands A, Z is an optional bridging moiety, and n is the integer number of parallel bridging moieties Z, Y is an amidine-containing spectator ligand represented by formula 2, wherein the amidine-containing ligand is covalently bonded to the metal M via the imine nitrogen atom, Sub₁ is a substituent, which comprises a group 14 atom through which Sub₁ is bonded to the imine carbon atom. Sub₂ is a hydrocarbyloxide or hydrocarbylsulphide, bonded via O respectively S to the imine carbon atom, r is an integer > 0, L is an optional neutral Lewis basic ligand, and j is an integer denoting the number of neutral ligands L, and X is an anionic ligand that is independently selected from the group consisting of hydride, halide, alkyl, silyl, germyl, aryl, amide, aryloxy, alkoxy, phosphide, sulfide, acyl, pseudo halide, azide, and acetylacetonate, or a combination thereof.

5. Organometallic compound according to claim 4, wherein L is an ether, a thioether, a tertiary amine, a tertiary phosphane, or a bi-, or oligodentate, comprising an ether, a thioether, a tertiary amine, or a tertiary phosphane functional group, or combinations thereof.

6. Organometallic compound according to claim 5, wherein the metal is a group 4 metal.

7. Organometallic compound according to claim 6, wherein the metal is Ti.

8. Organometallic compound according to claim 4-7, wherein A is a cyclopentadienyl containing ligand, an amidinate, a phosphinimine, a ketimine, a guanidate, or an imidoimidazolidine.

9. Organometallic compound according to claim 4 - 8, wherein the anionic ligand is a hydrocarbyl group.

10. Supported catalyst, which comprises an organometallic compound of claim 4 - 10, a supporting material and optionally a scavenger and/or an activator.

11. Process for the production of a organometallic compound according to claim 4 - 11, **characterized in that** an amidine-containing ligand according to formula 2 is contacted with an organometallic reagent according to formula 3,
MLⱼXₚ (formula 3),
wherein M is a metal from group 3, 4, 5, 6 or 7, or a metal from the lanthanide series, p is the valency of the metal M and X is a monoanionic ligand bonded to M.

12. Process according to claim 11, wherein the amidine-containing ligand is a metal salt of an amidine-containing ligand according to formula 4, 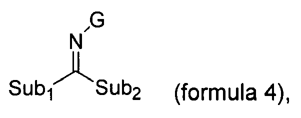 wherein G is a group comprising a metal of group 1, 2, or 13 or a group comprising Si, Ge, Sn or Pb.

13. Process according to claim 11, wherein the amidine-containing ligand is an amidine according to formula 5 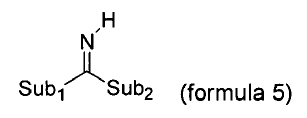 and the process is carried out in the presence of at least 1 equivalent of a base with respect to the organometallic reagent.

14. Process according to claim 13, wherein the amidine-containing ligand is an HB adduct of an amidine and the process is carried out in the presence of at least 2 equivalents of a base with respect to the organometallic reagent, and wherein HB represents an acid, of which H represents its proton and B its conjugate base.

15. Process according to any of claims 11 - 14, carried out in the further presence of a hydrocarbylating agent.

16. UHMWPE having a weight average molecular weight of at least 4.000 kg/mol **characterized in that** the UHMWPE has a molecular weight distribution M_{w}/Mₙ of less than 2.6.
